# EUROPEAN PATENT SPECIFICATION

(11) **EP 3 190 892 B1**
(45) Date of publication and mention of the grant of the patent: **11.03.2020**
(21) Application number: 15766204.0
(22) Date of filing: 09.09.2015
(51) Int. Cl.: A01N 47/46, A01N 63/00, A01N 63/02, A01N 63/04, A01N 65/00, A01P 5/00, A01N 25/00

(54) **BIOFUMIGANT**
BIOBEGASUNGSMITTEL
BIOFUMIGATION

(30) Priority: 09.09.2014 GB 201415937
(43) Date of publication of application: 19.07.2017
(73) Proprietor: Barworth Agriculture Ltd., Heckington, Sleaford NG34 9RP (GB)
(72) Inventor: BARKER, Dr. Anthony, Heckington Sleaford NG34 9RP (GB)
(74) Representative: Appleyard Lees IP LLP
(86) International application number: PCT/GB2015/052607
(87) International publication number: WO 2016/038365

(56) References cited:
- US-A1- 2008 182 751
- LUCA LAZZERI ET AL: "Effects of Glucosinolates and Their Enzymatic Hydrolysis Products via Myrosinase on the Root-knot Nematode Meloidogyne incognita (Kofoid et White) Chitw.", JOURNAL OF AGRICULTURAL AND FOOD CHEMISTRY, vol. 52, no. 22, 1 November 2004 (2004-11-01), pages 6703-6707, XP055219558, US ISSN: 0021-8561, DOI: 10.1021/jf030776u
- MARGARET E. MCCULLY ET AL: "Distribution of glucosinolates and sulphur-rich cells in roots of field-grown canola ( Brassica napus )", NEW PHYTOLOGIST, vol. 180, no. 1, 1 October 2008 (2008-10-01), pages 193-205, XP55218912, GB ISSN: 0028-646X, DOI: 10.1111/j.1469-8137.2008.02520.x
- A. RUMBERGER ET AL: "2-Phenylethylisothiocyanate concentration and microbial community composition in the rhizosphere of canola", SOIL BIOLOGY AND BIOCHEMISTRY, vol. 35, no. 3, 1 March 2003 (2003-03-01), pages 445-452, XP55218925, GB ISSN: 0038-0717, DOI: 10.1016/S0038-0717(02)00296-1
- ANNE LOUISE GIMSING ET AL: "Glucosinolates and biofumigation: fate of glucosinolates and their hydrolysis products in soil", PHYTOCHEMISTRY REVIEWS, KLUWER ACADEMIC PUBLISHERS, DO, vol. 8, no. 1, 9 July 2008 (2008-07-09), pages 299-310, XP019686431, ISSN: 1572-980X
- AHMAD I AL-TURKIB AND WARREN A DICK: "Myrosinase Activity in Soil", SOIL SCIENCE SOCIETY OF AMERICA. JOURNAL, US, vol. 67, no. 1, 1 January 2002 (2002-01-01), pages 139-145, XP009186524, ISSN: 0361-5995
- VLADIMIR BOREK ET AL: "Myrosinase Activity in Soil Extracts", SOIL SCIENCE SOCIETY OF AMERICA. JOURNAL, US, vol. 60, no. 6, 1 January 1996 (1996-01-01), pages 1792-1797, XP009186523, ISSN: 0361-5995
- NUANSRI RAKARIYATHAM ET AL: "Screening of filamentous fungi for production of myrosinase", BRAZILIAN JOURNAL OF MICROBIOLOGY, vol. 36, no. 3, 1 January 2005 (2005-01-01), XP055219620, DOI: 10.1590/S1517-83822005000300007
- NAOKI TANI ET AL: "Isolation of Myrosinase Producing Microorganism", AGRICULTURAL AND BIOLOGICAL CHEMISTRY, vol. 38, no. 9, 1 January 1974 (1974-01-01), pages 1617-1622, XP055219736, DOI: 10.1080/00021369.1974.10861387
- M AKHTAR ET AL: "Integrated Control of Plant Parasitic Nematodes on Potato with Organic Amendments, Nematicide and Mixed Cropping with Mustard", NEMATOL. MEDIT, vol. 19, 1 January 1991 (1991-01-01), pages 169-171, XP55219535,

## Description

The present invention relates to the field of biofumigants, more specifically the field of biofumigants for targeting crop diseases in solanacae species, for example, tomatoes and potatoes. In particular the present invention relates to biofumigants for the treatment of soil borne pathogens in agricultural and horticultural crops.

An example of soil borne pathogens are Plant Parasitic Nematodes, PPN. PPN are a pest that cause disease of the roots in many crop species. The problem leads to wide scale crop failure every year, with a significant economic impact. Current methods of tackling PPN are expensive, damaging to the environment, and have become increasingly ineffective.

Traditional pesticides such as fosthiazate are currently the standard treatment for addressing soil borne pathogens such as PPN. However application of fosthiazate and similar pesticides for bacteria and fungi borne pathogens is strictly controlled and the effectiveness is very dependent on soil conditions. Under some conditions, for example high temperature or higher soil pH, the pesticide can be degraded in as little as under ten days. Furthermore, such pesticides are likely to become obsolete in the near future due to the ever stricter regulations on the application of chemicals to soils and to plant products intended for consumption.

Alternative chemical solutions have been suggested. One example is the application of biocides to effectively disinfect soil of any microorganisms. However, although this is effective in the short term, only the top soil is cleared of microorganisms. In the longer term, microorganisms from the deeper layers of soil migrate up into the top soil and re-establish communities. Typically, it is the pathogenic microorganisms that establish the communities first, rendering the top soil more infective than before the biocide was applied.

The use of biological solutions has increased in recent years. One such solution is biofumigation. Biofumigation typically involves the generation of a natural biocide/pesticide from a sacrificial crop which is then macerated into the soil to release the biocide/pesticide and prepare the soil for the growth of the intended crop. For most soil pathogens including PPN, isothiocyanate compounds are effective biofumigants. The precursor chemicals glucosinolates are naturally produced by a series of plants together with myrosinase enzymes as a defence mechanism. When these plants are eaten or otherwise crushed, the cells release the glucosinolates and myrosinases, which then combine such that the myrosinases catalyse the conversion of glucosinolates into isothiocyanates.

However, a disadvantage of these biofumigation methods is that significant time and money is invested to plant a sacrificial crop which provides no revenue and is incorporated into a field before the desired crop can be grown. Furthermore, like any other chemical added to soil, the effectiveness of the naturally released isothiocyanates diminishes after a number of days depending on the weather conditions.

Lazzeri et al (J. Agric. Food Chem. 2004, 52, 6703-6707) describe the effects of glucosinates and their enzymatic hydrolysis products via myrosinase on the root knot nematode *Meloidgune incognita.* This study evaluated, in vitro, the biocidal activity of 11 glucosinolates and their degradation products on second stage juveniles. None of the intact glucosinolates had any biological effect. After myrosinase addition, their hydrolysis products resulted in highly different biocidal activities.

US2008/0182751 describes the use of brassicaceae plant materials as biopesticides. In the method brassicaceae plant material may be applied to soil prior to crop planting, simultaneously with crop planting or subsequent to plant emergence.

Mully et al (New Phytologist (2008) 180, 193-205) describe the distribution of glucosinolates and sulfur-rich cells in roots of field-grown canola.

Rumberger et al (Soil Biology & Biochemistry, 35, (2003), 445-452) describe the 2-phenylethylisothiocyanate concentration and microbial community composition in the rhizosphere of canola.

Gimsing and Kirkegaard (Phytochem Rev (2009)8:299-310) describe the fate of glucosinolates and their hydrolysis products in soil.

Al-Turki and Dick (Soil Sci.Soc. Am. J. 67: 139-145 (2003)) describe myrosinase activity in soil.

Marra and MaCaffrey (Soil Sci.Soc. Am. J. 60: 1792-1797 (1996) describe myrosinase activity in soil extracts.

Rakariyatham et al (Brazilian Journal of Microbiology (2005) 36: 242-245) describe the screening of filamentous fungi for production of myrosinase.

Akhtar and Alam describe integrated control of plant parasitic nematodes on potato with organic amendments, nematicide and mixed cropping with mustard.

It is an object of at least one or more aspects of the present invention to address one or more of the above-mentioned disadvantages in the prior art.

According to a first aspect of the present invention, there is provided a method of treating soil, the method comprising providing the soil with a glucosinolate-secreting plant and contacting said soil with a myrosinase-secreting microorganism.

According to a second aspect of the present invention, there is provided the use of a combination of a myrosinase-secreting microorganism, and a glucosinolate-secreting plant for treating soil.

Further disclosed herein is a kit for treating soil, the kit comprising a glucosinolate-secreting plant or a source thereof, and a myrosinase-secreting microorganism or a source thereof.

Preferred features of the first, second and further aspects of the invention will now be described. Any feature of any aspect may apply to any other aspect as appropriate.

In the method of the present invention the soil treated is provided with a glucosinolate and a myrosinase. These suitably interact to produce an isothiocyanate. This isothiocyanate is suitably the active biocidal/pesticidal species, i.e. the biofumigant.

Advantageously, the use of a plant-microorganism system to generate the biofumigant instead of destroying the natural cellular plant system means that the plants themselves do not have to be destroyed by macerating or incorporation into the field in order to provide the soil with biofumigant. Since the plant secretes the precursor chemical glucosinolates, external microorganisms can provide the enzyme myrosinases to convert the precursors to the biofumigant outside the plant. This allows the farmer to use the biofumigant crop as a product and potentially generate revenue therefrom in addition to the increased revenue from the now healthy intended crop. Furthermore, the biofumigant crop can be grown together with the intended crop by intercropping or other such techniques, thereby generating the biofumigant in the soil continuously throughout the growing period of the intended crop. This avoids any tapering off of the biofumigant levels and maintains the soil at a certain level of biofumigant which avoids the return of any pests or disease, and allows the farmer more flexibility due to less dependency on soil conditions and weather.

The method of the first aspect of the present invention is suitably a biofumigation method. Suitably, the biofumigant is an isothiocyanate. The isothiocyanate produced will typically depend on the glucosinolate secreted from the plant and the particular myrosinase enzyme secreted from the microorganism. The specific glucosinolate product will usually depend on the particular species of plant. The myrosinase produced will depend on the specific species of microorganism.

The method of the present invention relies on the presence of myrosinase and glucosinolates in the soil. If a soil is already rich in one of these components the invention may involve introducing the other component into the soil.

According to a further aspect of the present invention, there is provided the use of a myrosinase-secreting microorganism for treating soil wherein the soil comprises a source of glucosinolates.

Further described herein is the use of a glucosinolate-secreting plant for treating soil wherein the soil comprises a source of myrosinases.

The present invention suitably provides an isothiocyanate in the soil. In some preferred embodiments the isothiocyanate is selected from one or more optionally substituted aryl, allyl or alkyl isothiocyanate, more preferably a C1-C10 alkyl, allyl or aryl isothiocyanate, most preferably, benzyl isothiocyanate, isopropyl isothiocyanate, methyl isothiocyanate, 1-napthyl isothiocyanate, 2- phenylethyl isothiocyanate, phenyl isothiocyanate, propyl isothiocyanate or similar.

Optionally, the aspects of the invention may comprise more than one plant, and/or more than one microorganism. Accordingly, any references herein to the plant, or a microorganism include one or more plants and one or more microorganism.

The present invention involves a glucosinolate-secreting plant. This may suitably be provided as a plant or a seed. Preferably the plant is a crop plant or a seed thereof. Any references to a plant herein include the seed thereof as appropriate.

Preferably the plant is of the order Brassicales. Preferably the plant is of the family Brassicaceae. Still more preferably the plant is of the genera Brassica or Raphanus. More preferably the plant is selected from one of the following species *Brassica balearica, Brassica carinata, Brassica elongata, Brassica fruticulosa, Brassica hilarionis, Brassica juncea, Brassica napus, Brassica narinosa, Brassica nigra, Brassica oleracea, Brassica perviridis, Brassica rupestris, Brassica rapa, Brassica septiceps, Brassica tournefortii, Raphanus sativa, Raphanus caudatus, Raphanus confusus or Raphanus raphanistrum.* Still more Preferably the plant is of the species *Brassica oleracea, Brassica juncea, Brassica alba,* or *Raphanus sativus.* Most preferably the plant is of the species *Brassica alba, Brassica juncea, or Raphanus sativus.* Preferably the glucosinolate secreted from the plant is selected from one of the following: gluconasturtin, glucobrassicin, glucoalyssin, glucoraphanin, progoitrin, or sinigrin. More preferably the glucosinolate is sinigrin.

The method of the first aspect of the invention involves providing the soil with a glucosinolate secreting plant.

Suitably, providing the soil with a glucosinolate-secreting plant may include growing said plant in the soil, or distributing the seed of said plant in or on the soil by such processes as planting, spreading or drilling etc.

Optionally, the method may further comprise the step of inducing the secretion of glucosinolate from the plant and/or inducing the secretion of myrosinase from the microorganism. Optionally this inducement may comprise contacting the plant and/or microorganism with an inducing chemical such as an inducing hormone or pheromone or metabolic agent, for example the application of the messenger protein 'harpin' or the application of methyl jasmonate to the foliage. Alternatively, the inducement may comprise causing physical damage to plant cells, stimulation of the immune system or other methods of causing the plant stress.

The present invention involves contracting the soil with a myrosinase-secreting microorganism. Preferably the myrosinase-secreting microorganism is selected from a myrosinase-secreting bacterium and a myrosinase-secreting fungus.

In some preferred embodiments the source of myrosinases is a bacterium or a spore. Preferably the bacterium is a soil borne bacterium or a spore thereof. Accordingly, any references to a bacterium herein include the spores thereof.

Suitably the bacterium is selected from the order *Bacillales, Rhizobiales, Enterobacteriales, Clostridales, Lactobacillales* and *Pseudomonadales.* The bacterium may be selected from the *genera Pseudomonas, Lactobacillus, Sarcina, Enterobacter, Agrobacterium* and *Bacillus.*

In some embodiments the myrosinase-secreting microorganism is a fungus. Preferably the fungus is a soil borne fungus or a spore thereof. References to a fungus include the spores thereof.

Suitably the fungus is selected from the genera *Aspergillus, Fusarium* and *Lichtheimia.* Suitably the myrosinase-secreting microorganism is a bacterium, fungi of a source thereof selected from the genera *Pseudomonas, Lactobasillus, Sarcina, Enterobacter, Argobacterium, Bacillus, Asperillus, Fusarium* and *Lichtheimia.*

In some embodiments the microorganism is a bacterium.

Preferably the bacterium is of the order Bacillales. More preferably the bacterium is of the family Balliaceae. Still more preferably the bacterium is of the genera Bacillus. Still more preferably the bacterium is selected from one of the following species: *B.acidocaldarius B.alcalophilus, B.alvei, B.aminovorans, B.amyloliquefaciens, B.aneurinolyticus. B.anthracis B.aquaemaris, B.atrophaeus, B.azotoformans, B.badius, B.boroniphilus B.brevis, B.caldolyticus, B.centrosporus, B.cereus, B.circulans, B.coagulans, B.fastidious, B.firmus, B.flavothermus, B.fusiformis, B.galliciensis, B.globigii, B.globisporus, B.infernus, B.insolitus, B.larvae, B.laterosporus, B.lentimorbus, B.lentus, B.licheniformis B.macerans, B.macquariensis, B.marinus, B.megaterium, B.mesentericus, B.mucilaginosus, B.mycoides, B.pantothenticus, B.pasteurii, B.polymyxa, B.popilliae, B.pseudoanthracis, B.pumilus, B.schlegelii, B.sphaericus, B.sporothermodurans, B.stearothermophilus, B.subtilis, B.thermoglucosidasius, B.thuringiensis, B.vulgatis,* and *B*. *weihenstephanensis.* Most preferably the bacterium is *Bacillus sphaericus. Bacillus sphaericus* may otherwise be known as *Lysinibacillus sphaericus.*

In some embodiments the bacterium may be selected from the genera Pseudomonas. For example the bacterium may be selected from *Pseudomonas gingeii, Pseudomonas brassicacaerum, Pseudomonas poae* and *pseudomonas azotoformans.*

In some embodiments the bacterium may be selected from the genera *Lactobacillus.* For example the bacterium may be *Lactobacillus agilis.*

In some embodiments the bacterium may be selected from the genera *Agrobacterium.* For example the bacterium may be *Agrobacterium tumerfasciens.*

In some embodiments the bacterium may be selected from the generea *Sarcina.* For example the bacterium may be *Sarcina lutea.*

In some embodiments the bacterium may be selected from the genera *Enterobacter.* For example the bacterium may be *Enterobacter cloacae.*

In some embodiments the myrosinase-secreting microorganism is a fungus of the genera *Fusarium.* For example the may be of the *Fusarium species.*

In some embodiments the fungus is of the species *Aspergillus,* for example, *Aspergillus* species or *Aspergillus terreus.*

In some embodiments the fungus is of the genera Lichtheimia. For example the fungus may be *Lichtheimia species.*

Preferably the myrosinase enzyme is from class EC 3.2.1.147.

Myrosinase may also be known as thioglucoside glucohydrolase, sinigrinase, and sinigrase.

Suitably the amount of myrosinase-secreting microorganism contacted with the soil is an amount necessary to produce the effective amount of myrosinase relative to the amount of glucosinolate secreted by the plants.

The method of the first aspect of the invention involves contacting the soil with a myrosinase-secreting microorganism.

Suitably, contacting the soil with a myrosinase-secreting microorganism may include spreading said microorganism on the soil, or depositing said microorganism in the soil by such processes as spraying, ploughing or any other methods of incorporating into the soil. Preferably contacting the soil with a myrosinase-secreting bacteria includes contacting the soil in the vicinity of a glucosinolate-secreting plant, more preferably in the vicinity of a root of a glucosinolate-secreting plant, still more preferably in the rhizosphere and/or rhizoplane of a root of a glucosinolate-secreting plant, most preferably on the root of a glucosinolate-secreting plant.

In one embodiment the microorganism may be coated onto a seed of the plant.

Thus, according to a sixth aspect of the present invention, there is provided a seed of a glucosinolate-secreting plant comprising a coating, wherein the coating comprises a myrosinase-secreting microorganism.

Preferably the seed comprises a coating in which the myrosinase-secreting microoragnism is trapped or encased. Preferably the coating is formed from an aqueous solution in which the microorganism is suitably suspended. Preferably the aqueous solution comprises one or more polymers. Preferably the polymers are adhesion promoting polymers such as, for example, carboxymethylcellulose (CMC).

Suitably, the coating is applied to the seed by spraying, dipping, immersion, painting or any other appropriate method.

In one embodiment, the present invention relates to one plant and one bacterium, which suitably each secrete one glucosinolate and one myrosinase respectively. Preferably the plant is *Brassica oleracae,* more preferably a cultivar of Purple Sprouting broccoli (Redhead), and the bacterium is *Bacillus sphaericus.* Preferably therefore, the glucosinolate is sinigrin. Advantageously, purple sprouting broccoli is a fast growing and high value crop in itself that can be grown for the purposes of revenue and also for the purposes of soil treatment according to the present invention, effectively performing both functions at once. Advantageously, *Bacillus sphaericus* is a bacterium which is easy to culture in bulk in a laboratory environment and which grows naturally in soil. Therefore the bacterium can be produced easily and survives well when transferred into the soil for the treatment.

Alternatively, other pairings of plants and microorganisms, or glucosinolates and myrosinases may be appropriate. Other suitable embodiments of one plant and one microorganism include: *Sinapsis alba* and *Bacillus sphaericus;* and *Brassica juncea* and *Bacillus sphaericus.*

Preferably the soil treatment is for the benefit of crop plants, more preferably for crop plants at risk of loss from soil borne pathogens, still more preferably crops of the order Solanales, still more preferably for crop plants of the family Solanaceae, preferably for crop plants from the genus Solanum. Most preferably the soil treatment is for crop plants selected from the following species *Solanum tuberosum* and/or *Solanum lycopersicum.*

Thus the present invention may provide a method of improving the yield of a crop plant, the method comprising treating soil in which the crop plant is to be grown according to the method of the first aspect.

Suitably the method of the present invention provides a method of combatting a pathogenic infection in the soil. Suitably the method combats an infection of one or more pathogenic microorganisms, preferably pathogenic nematodes, more preferably cyst nematodes, most preferably potato cyst nematodes of the genus Globodera, for example the species *Globodera rostochiensis* and *Globodera pallida.*

By combating pathogens we mean to refer to killing some or all of the pathogens present in the soil, or preventing the growth of the number of pathogens in the soil, reducing infection, reducing activity of the pest or acting as an antifeedant and/or repellent towards the pathogen. Suitably combatting pathogens reduces the number of pathogens in the soil.

Preferably the treatment method of the first aspect reduces the concentration of pathogens in the soil. Suitably it reduces the concentration of pathogenic microorganisms in the soil. Preferably it reduces the concentration of pathogenic nematodes in the soil. More preferably it reduces the concentration of potato cyst nematodes in the soil.

Preferably the treatment of the soil reduces the concentration of pathogenic microorganisms in the soil by at least 5%, preferably by at least 10%, suitably at least 15%, more preferably by at least 20%, still more preferably 25%. It may reduce the concentration of the pathogenic microorganisms in the soil by at least 30%, suitably at least 50%, for example at least 60%, at least 70%, or at least 80%.

Preferably the treatment of the soil reduces the concentration of pathogenic microorganisms in the soil to below the commercial economic damage threshold.

The reduction of pathogens using traditional biofumigation methods in which a sacrificial crop is macerated in to the soil may be from 10% to 70%. The present invention provides a reduction in pathogens within this range. In some embodiments the method of the present invention also provides the glucosinolate-secreting plant as a commercially viable crop. However even when intended as a sacrificial crop, the present invention provides advantages over the prior art. This is because the biofumigant is produced in the soil during the growing phase of the glucosinolate-secreting plant. Unlike traditional biofumigation methods in which the crop is mulched into the soil, there is no need to wait until at least 50% of the crop has flowered.

Any of the aspects contained herein may be combined with any of the preferred embodiments contained herein in any workable combination.

The invention will now be further explained by way of example only with reference to the accompanying figures in which:
Figure 1 is a graph of a replicated field trial of the level of potato cyst nematode eggs in plots of seven different biofumigant crops;
Figure 2a is a representation of the level of potato cyst nematode eggs in a field plot before the growth of biofumigant crops;
Figure 2b is a representation of the level of potato cyst nematode eggs in a field plot after the growth of biofumigant crops; and
Figure 3 shows the number of potato cyst nematodes (PCN) hatched over a nine week period under various conditions.

### Example 1

A field trial was constructed to test the levels of pathogens in soil when traditional biofumigant crops are typically grown, especially the level of the pathogen PCN or 'potato cyst nematodes'. A field was separated into blocks and sampled for nematode eggs using DGPS to map the field in 1/4 hectare blocks. Each block was then sampled by taking 40 soil cores at predetermined spacings using DGPS. The cores were then amalgamated into a single soil sample.

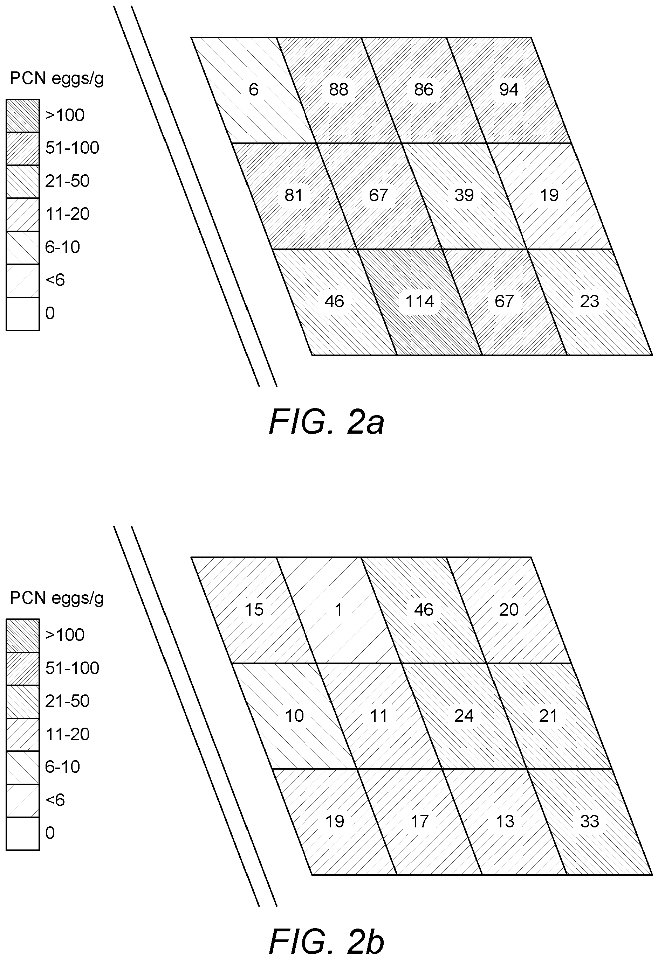

Samples were taken in each block as described in January 2011, before the growth of biofumigant crops (figure 2a), and again in December 2012 after the growth of biofumigant crops but *before* maceration of the crops (figure 2b).

The samples were processed and analysed using a standard method as described in 'MAFF Reference book 402. Laboratory Methods for Work with Plant and Soil Nematodes' Ed. J F Southey. Sixth edition 1986. The results given in eggs/g of soil.

The difference in the pathogen level in the soil before the biofumigant crops are grown and after the biofumigant crops are grown can be seen by comparing figures 2a and figure 2b. Surprisingly, a reduction in pathogen level, indicated by a reduction in the level of potato cyst nematode eggs, is demonstrated in all blocks of the field except two. Some blocks showed an overall reduction of over 80% of eggs/g of soil and a reduction in the level of potato cyst nematodes to below 30 eggs/g of soil, and in some cases below 20 eggs/g of soil.

It is clear that the level of potato cyst nematode eggs is considerably reduced with the growth of some of the species of biofumigant plants in the field. However, surprisingly, this reduction in pathogens in the soil was achieved *before* the typical maceration of the biofumigant crops used in biofumigation processes.

Accordingly, the inventors surprisingly discovered that these plants secrete glucosinolates into the soil which are converted to isothiocyanates by bacteria present in the soil, found by the inventors to be myrosinase-secreting bacteria. On the basis of this data, the inventors proposed the method according to the invention in which glucosinolate secreting plants and myrosinase secreting bacteria can be used to generate the biofumigant isothiocyanates in the soil without the need to macerate or destroy the biofumigant crop. This method is tested in example 2.

### Example 2

A replicated field trial was constructed to test various typical biofumigant crops with myrosinase-secreting bacteria in accordance with the method of the invention.

Plots of seven biofumigant plant varieties plus a fallow (empty) plot as a control were laid out. Some of the plant varieties include commercial biofumigant crops such as SpudGuard and variety 199. Each 'treatment' consisted of 5 plots/replicate. Each plot measured 10m x 4 m. The trial was laid out in a randomised block design. Soil samples from each plot were taken at drilling of the seeds of each crop, and again just before the crop was destroyed. Each soil sample consisted of 20 soil cores to a depth of 25 cm taken in a grid pattern across each plot. The duration between drilling the crop and the second sampling was 56 days.

The soil samples were processed and analysed using standard methods as described in 'MAFF Reference book 402. Laboratory Methods for Work with Plant and Soil Nematodes' Ed. J F Southey. Sixth edition 1986. The results are given in potato cyst nematode eggs/g of soil.

Data analysis was undertaken using ARM8. (Bartletts followed by ANOVA).

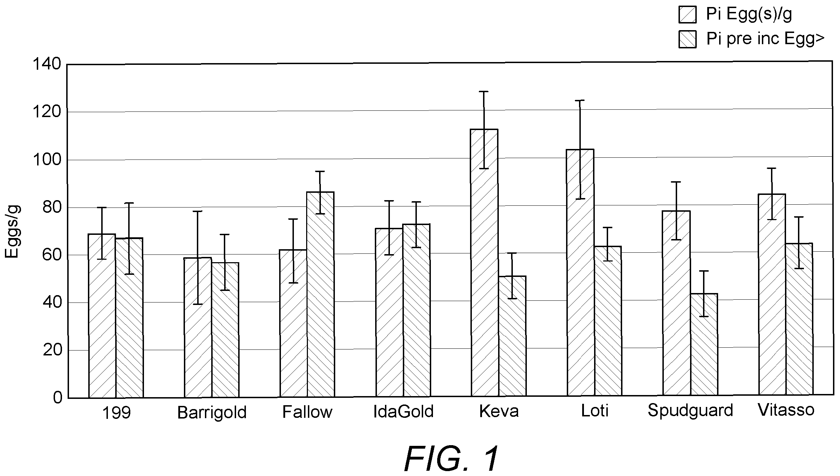

Referring to figure 1, for each plant, the left hand blue column shows the level of potato cyst nematode eggs per gram of soil at drilling of the seeds of the biofumigant crops, the right hand red column shows the level of potato cyst nematodes after the crops have been grown for 56 days. The soil the plants were grown in contained myrosinase-secreting bacteria of *Bacillus sphaericus.*

From figure 1, it is clear that the level of potato cyst nematode eggs is considerably reduced with the growth of some of the species of biofumigant plants, in particular, Keva and Loti, both species of Brassica in soil containing myrosinase-secreting bacteria. Again, this reduction in pathogens in the soil was achieved *before* the typical maceration of the biofumigant crops used in traditional biofumigation processes.

Accordingly, example 2 demonstrates that certain plants of the Brassica genus secrete glucosinolates into the soil which are converted to isothiocyanates by bacteria present in the soil, found by the inventors to be myrosinase-secreting bacteria, in particular bacteria of the Bacillus genus. Example 2 furthermore replicates the situation shown in the field in example 1 under a controlled environment.

Both examples show that the methods of the invention give a significant reduction in pathogen load within the soil of fields without the need to destroy the biofumigant crop, and with a sustained release of isothiocyanate biofumigant into the soil starting from only 56 days after planting and up to at least 1 year.

### Example 3

*Globodera pallida* cysts which had been stored at 4ºC for 4 weeks were sealed in silk teabags and placed into soil. Keva seedlings were placed into 1L pots containing a 50:50 mix of loam and sand. Cereal was planted into the control pots, with all others growing mustard. The test pots either contained the mustard only, mustard and myrosinase-secreting bacteria (*B*. *sphaericus* and *Lactobaccilus*), or mustard and a mixture of fungal isolates of *Fusarium.*

Fungi 1A, 4A, 4D were grown on PDA plates. Six confluent 90mm petri dishes of each (freshly cultured) fungi were harvested using a pipette tip, added to 40ml SDW, mixed, resulting in 45ml of a fungal mix. 7ml of mix was delivered to the root of the Keva plants using a syringe.

Bacteria E7 and E10 were grown in separate 50ml falcon tubes containing 35ml MRS Broth, shaken 48 hours at RT. OD600 of 1.000 and 0.400 were obtained respectively, mixed, then 5ml added per pot.

After the plants were grown for 10 weeks and mustards were flowered 50%, the cysts were removed for further processing. Cysts were rehydrated in water for 7 days at 15ºC and transferred to potato root diffusate (PRD) for incubation at 15ºC. PRD was obtained from Estima plants 4 weeks post emergence. The cysts were removed to fresh PRD weekly for 9 weeks and the number of hatched juveniles was counted. At the end of the hatching experiment, the remaining eggs were counted. The percentage of hatched juveniles was calculated using the total count.

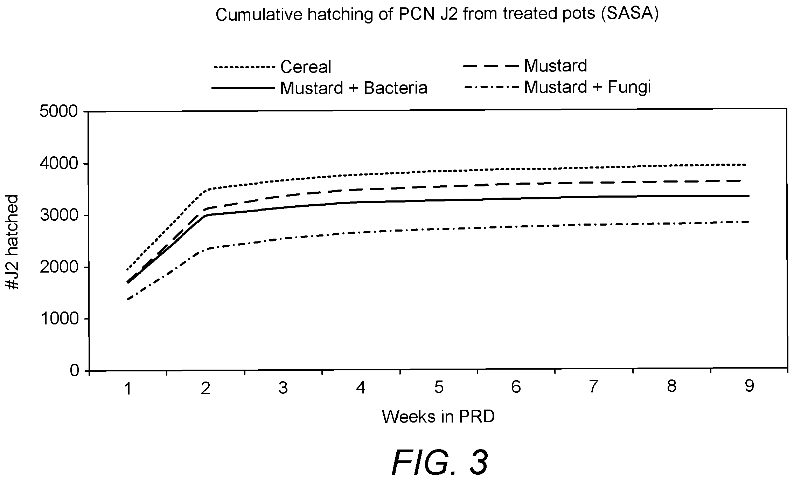

Table 1 and figure 3 show the mean cumulative hatching of PCN juveniles from treated pots over 9 weeks.

**Table 1**

| Treatment | 1 | 2 | 3 | 4 | 5 | 6 | 7 | 8 | 9 |
|---|---|---|---|---|---|---|---|---|---|
| Cereal | 1967 | 3511 | 3682.5 | 3789.5 | 3828.5 | 3882 | 3893.5 | 3925 | 3926 |
| Mustard | 1729 | 3132 | 3366 | 3489.5 | 3524 | 3589 | 3601.5 | 3616 | 3620 |
| Mustard + Bacteria | 1718 | 2986 | 3138.5 | 3250.5 | 3275.5 | 3308.5 | 3316 | 3328 | 3330.5 |
| Mustard + Fungi | 1385 | 2346 | 2552.5 | 2671.5 | 2717 | 2759 | 2769.5 | 2800 | 2807 |

## Claims

1. A method of treating soil, the method comprising providing the soil with a glucosinolate-secreting plant and contacting said soil with a myrosinase-secreting microorganism.

2. A method according to claim 1 wherein the glucosinolate and myrosinase interact to form an isothiocyanate.

3. A method according to claim 2 wherein the isothiocyanate is selected from benzyl isothiocyanate, isopropyl isothiocyanate, methyl isothiocyanate, 1-napthyl isothiocyanate, 2-phenylethyl isothiocyanate, phenyl isothiocyanate and propyl isothiocyanate.

4. A method according to any preceding claim wherein the glucosinolate-secreting plant is of the order Brassicales.

5. A method according to any preceding claim which is a method of combating a pathogenic infection in the soil.

6. A method according to claim 5 which is a method of combating pathogenic nematodes.

7. The use of a combination of a myrosinase-secreting microorganism, and a glucosinolate-secreting plant for treating soil.

8. The use of a myrosinase-secreting microorganism for treating soil wherein the soil comprises a source of glucosinolates.

9. A seed of a glucosinolate-secreting plant comprising a coating, wherein the coating comprises a myrosinase-secreting microorganism.

10. A method, use, or seed according to any preceding claim wherein the myrosinase-secreting microorganism is a myrosinase-secreting bacterium.

11. A method, use, or seed according to any of claims 1 to 9 wherein the myrosinase-secreting microorganism is a myrosinase-secreting fungus.

12. A method, use, or seed according to claim 10 wherein the myrosinase-secreting bacterium is *Bacillus sphaericus.*

## Patentansprüche

1. Verfahren zur Erdbodenbehandlung, wobei man bei dem Verfahren dem Erdboden eine Glucosinolat sezernierende Pflanze bereitstellt und den Erdboden mit einem Myrosinase sezernierenden Mikroorganismus in Kontakt bringt.

2. Verfahren nach Anspruch 1, wobei das Glucosinolat und die Myrosinase unter Bildung eines Isothiocyanats in Wechselwirkung treten.

3. Verfahren nach Anspruch 2, wobei das Isothiocyanat aus Benzylisothiocyanat, Isopropylisothiocyanat, Methylisothiocyanat, 1-Naphthylisothiocyanat, 2-Phenylethylisothiocyanat, Phenylisothiocyanat und Propylisothiocyanat ausgewählt ist.

4. Verfahren nach einem der vorhergehenden Ansprüche, wobei die Glucosinolat sezernierende Pflanze aus der Ordnung Brassicales stammt.

5. Verfahren nach einem der vorhergehenden Ansprüche, bei dem es sich um ein Verfahren zur Bekämpfung einer pathogenen Infektion in dem Erdboden handelt.

6. Verfahren nach Anspruch 5, bei dem es sich um ein Verfahren zur Bekämpfung pathogener Nematoden handelt.

7. Verwendung einer Kombination eines Myrosinase sezernierenden Mikroorganismus und einer Glucosinolat sezernierenden Pflanze zur Behandlung von Erdboden.

8. Verwendung eines Myrosinase sezernierenden Mikroorganismus zur Behandlung von Erdboden, wobei der Erdboden eine Glucosinolatquelle umfasst.

9. Samen einer Glucosinolat sezernierenden Pflanze, der eine Beschichtung umfasst, wobei die Beschichtung einen Myrosinase sezernierenden Mikroorganismus umfasst.

10. Verfahren, Verwendung oder Samen nach einem der vorhergehenden Ansprüche, wobei es sich bei dem Myrosinase sezernierenden Mikroorganismus um ein Myrosinase sezernierendes Bakterium handelt.

11. Verfahren, Verwendung oder Samen nach einem der Ansprüche 1 bis 9, wobei es sich bei dem Myrosinase sezernierenden Mikroorganismus um einen Myrosinase sezernierenden Pilz handelt.

12. Verfahren, Verwendung oder Samen nach Anspruch 10, wobei es sich bei dem Myrosinase sezernierenden Bakterium um *Bacillus sphaericus* handelt.

## Revendications

1. Méthode de traitement d'un sol, la méthode comprenant la mise à disposition vis-à-vis du sol d'une plante sécrétant du glucosinolate et la mise en contact dudit sol avec un microorganisme sécrétant de la myrosinase.

2. Méthode selon la revendication 1, dans laquelle le glucosinolate et la myrosinase interagissent afin de former un isothiocyanate.

3. Méthode selon la revendication 2, dans laquelle l'isothiocyanate est choisi parmi l'isothiocyanate de benzyle, l'isothiocyanate d'isopropyle, l'isothiocyanate de méthyle, l'isothiocyanate de 1-naphtyle, l'isothiocyanate de 2-phényléthyle, l'isothiocyanate de phényle et l'isothiocyanate de propyle.

4. Méthode selon l'une quelconque des revendications précédentes, dans laquelle la plante sécrétant du glucosinolate appartient à l'ordre des Brassicales.

5. Méthode selon l'une quelconque des revendications précédentes, qui est une méthode de lutte contre une infection pathogène dans le sol.

6. Méthode selon la revendication 5, qui est une méthode de lutte contre des nématodes pathogènes.

7. Utilisation d'une combinaison d'un microorganisme sécrétant de la myrosinase, et d'une plante sécrétant du glucosinolate, pour le traitement d'un sol.

8. Utilisation d'un microorganisme sécrétant de la myrosinase pour le traitement d'un sol, dans laquelle le sol comprend une source de glucosinolates.

9. Semence d'une plante sécrétant du glucosinolate comprenant un enrobage, où l'enrobage comprend un microorganisme sécrétant de la myrosinase.

10. Méthode, utilisation, ou semence selon l'une quelconque des revendications précédentes, le microorganisme sécrétant de la myrosinase étant une bactérie sécrétant de la myrosinase.

11. Méthode, utilisation, ou semence selon l'une quelconque des revendications 1 à 9, le microorganisme sécrétant de la myrosinase étant un champignon sécrétant de la myrosinase.

12. Méthode, utilisation, ou semence selon la revendication 10, la bactérie sécrétant de la myrosinase étant *Bacillus sphaericus.*
